# EUROPEAN PATENT APPLICATION

(11) **EP 4 557 095 A1**
(43) Date of publication of application: **21.05.2025**
(21) Application number: 23213273.8
(22) Date of filing: 30.11.2023
(51) Int. Cl.: G06F 9/48, G06F 9/50, G06F 9/54, H04L 47/83

(54) **INTERNET OF VEHICLES PLATFORM EXPANSION AND CONTRACTION METHOD AND SYSTEM, AND STORAGE MEDIUM**

(30) Priority: 28.09.2023 CN 202311278817
(71) Applicant: Chongqing Changan Automobile Co., Ltd., Chongqing 400023 (CN)
(72) Inventor: Luo, Tao, Chongqing 400023 (CN); Wu, Zhijun, Chongqing 400023 (CN); Huang, Li, Chongqing 400023 (CN); Long, Meiyuan, Chongqing 400023 (CN); Yi, Gang, Chongqing 400023 (CN)
(74) Representative: Patentanwaltskanzlei Matschnig & Forsthuber OG

(57) **Abstract**

Disclosed are an Internet of Vehicles platform expansion and contraction method and system, and a storage medium, which belong to the technical filed of Internet of Vehicles platforms. The method includes: acquiring resource prediction basic information, and performing resource prediction based on the resource prediction basic information and a pre-constructed resource prediction model; determining a corresponding middleware messaging solution based on a service type; generating an expansion and contraction solution based on a predicted resource and the middleware messaging solution, and performing Internet of Vehicles platform expansion and contraction based on the expansion and contraction solution; and correcting, based on a change in a consumer cluster, the Internet of Vehicles platform expansion and contraction solution in real time during operation. The middleware messaging solution is determined based on the service type, to realize stateful service deployment. A partitioning strategy and a threading model are used to ensure that device data is processed by the same partition, the same consumer instance, and a thread, so as to ensure a time sequence of the device data.

## Description

### Field of the Invention

The present disclosure relates to the technical field of Internet of Vehicles platforms, and specifically, to an Internet of Vehicles platform expansion and contraction method and system, and a storage medium.

### Background of the Invention

With the rapid development of intelligent connected vehicles, the amount of terminal access to an Internet of Vehicles platform is also growing at the same time. In general, the pressure on data processing of the Internet of Vehicles platform is getting bigger and bigger. In actual practice, traffic usage of the Internet of Vehicles platform demonstrates an obvious periodic characteristic. For example, the vehicle usage frequency during the day is higher than that at night. In the current solution of allocating a resource based on the maximum demand, this traffic usage of the Internet of Vehicles platform caused by different demands for vehicles will lead to obvious resource waste in a time interval with extremely low vehicle usage frequency, such as late at night. However, if a resource is allocated based on average traffic usage, a resource allocation need will not be satisfied in a time interval with high vehicle usage frequency, resulting in reduced user experience. In view of this situation, it is imperative to perform Internet of Vehicles platform expansion and contraction dynamically based on an actual need.

Currently, there are some solutions to satisfy this need. For example, the solution of the patent application No. CN112988398A, titled "Micro-service Dynamic Scaling and Migration Method and Device", proposes a solving strategy. According to this solving strategy, a to-be-optimized micro-service is marked by using a micro-service calling delay and an average resource utilization rate per unit time as thresholds. In a case that a tolerance condition is triggered, a target copy number corresponding to the to-be-optimized service is calculated based on a target resource utilization rate, a current resource utilization rate, the tolerance, and a current copy number, and a corresponding expansion and contraction operation is performed. This expansion and contraction method is relatively applicable to a stateless micro-service. However, in a scene of Internet of Vehicles, there are some stateful services (such as a device gateway), which include status data such as a device ID and basic information. However, this expansion and contraction technology is the same as the conventional load balancing strategy, and cannot realize session adhesion. Even if horizontal expansion is performed, status data of a single node will reach a resource upper limit due to an increase in traffic.

For another example, the solution of the patent application No. CN115756853A, titled "Intelligent Capacity Expansion and Reduction Method and System Based on Capacity Early Warning", proposes another solving strategy. According this solving strategy, a capacity warning is triggered, based on CPU and memory utilization rate thresholds, by sensing CPU and memory information of a service, a capacity change trend is determined based on a user request rate, and an expansion and contraction task is performed. However, indexes of this expansion and contraction method are limited to a CPU and a memory, and an expansion and contraction operation is passively triggered based on the indexes, which has a certain time delay.

Other existing solving strategies also suffer from the same problem, that is, they cannot simultaneously realize dynamic expansion and contraction and ensure a time sequence of data in the scene of Internet of Vehicles. The existing solutions have a certain limitation on dynamic expansion and contraction and ensuring a time sequence of data. In view of this problem, a novel Internet of Vehicles platform expansion and contraction method is needed.

### Summary of the Invention

An objective of the present disclosure is to provide an Internet of Vehicles platform expansion and contraction method and system in order to solve the problem that the existing expansion and contraction solutions have a certain limitation on dynamic expansion and contraction and ensuring a time sequence of data.

In order to achieve the foregoing objective, the present disclosure adopts the following technical solutions.

In a first aspect, the present disclosure provides an Internet of Vehicles platform expansion and contraction method, which includes: acquiring resource prediction basic information, and performing resource prediction based on the resource prediction basic information and a pre-constructed resource prediction model; determining a corresponding middleware messaging solution based on a service type; generating an expansion and contraction solution based on a predicted resource and the middleware messaging solution, and performing Internet of Vehicles platform expansion and contraction based on the expansion and contraction solution; recognizing each piece of consumer instance identifier information, performing consumer instance information interaction based on the identifier information and the Internet of Vehicles platform subjected to expansion and contraction, and providing a corresponding service; and correcting, based on a change in a consumer cluster, the Internet of Vehicles platform expansion and contraction solution in real time during operation.

Optionally, the resource prediction basic information includes: usage information of one or more targets of a central processing unit (CPU), a memory, a disk, a network bandwidth, input/output (I/O).

Optionally, the method further includes: constructing a resource prediction model, which includes: acquiring historical usage information of vehicle terminal traffic on the Internet of Vehicles platform, and performing model training by using the historical usage information as a training sample to obtain a traffic-resource trend model; dividing a prediction period into a plurality of sub-periods, and calculating a feature vector corresponding to each sub-period based on resource prediction basic information of each sub-period; and constructing a prediction model based on the feature vector corresponding to each sub-period and the traffic-resource trend model, and taking the prediction model as a resource prediction model.

Optionally, the calculating a feature vector corresponding to each sub-period based on resource prediction basic information of each sub-period includes: respectively calculating, within each sub-period, an evaluation index of each piece of resource prediction basic information; generating an initial vector of each index within each sub-period based on the evaluation index of each piece of resource prediction basic information. The evaluation index includes: one or more of a mean value, a maximum value, a minimum value, and a median.

Optionally, the determining a corresponding middleware messaging solution based on a service type includes: determining that the middleware messaging solution is a stateful service deployment rule in a case that the service type is a stateful service. The stateful service deployment rule includes: recognizing a device identifier, and binding a middleware partition based on the identifier; and querying basic information based on the device identifier, and transmitting the basic information downstream by enhancing a message header.

Optionally, the generating an expansion and contraction solution based on a predicted resource and the middleware messaging solution includes: determining capacity basic information of the Internet of Vehicles platform based on the predicted resource; correcting, based on a preset margin correction rule, the capacity basic information to obtain a corrected target capacity; and determining the expansion and contraction solution of the Internet of Vehicles platform based on the corrected target capacity and the middleware messaging solution.

Optionally, the performing Internet of Vehicles platform expansion and contraction based on the expansion and contraction solution includes: determining an expansion and contraction direction and an expansion and contraction capacity of the Internet of Vehicles platform based on the corrected target capacity; and performing Internet of Vehicles platform expansion and contraction based on the expansion and contraction direction, the expansion and contraction capacity, and the determined middleware messaging solution.

Optionally, the determining that the middleware messaging solution is a stateful service deployment rule in a case that the service type is a stateful service includes: allocating, based on a least connections algorithm, an access router to each access device to obtain a first allocation rule; querying a database during creation of device basic information, subsequently storing in a socket-based channel of a device gateway layer, and determining a second allocation rule based on an allocated channel; and determining the stateful service deployment rule based on the first allocation rule and the second allocation rule.

Optionally, a message receiving and parsing component of each device gateway on the Internet of Vehicles platform is operated based on an event loop and network channel binding mechanism. The event loop and network channel binding mechanism includes: randomly selecting, in a case that a new network channel is created, an event loop from an event loop group to be bound to the network channel, and subsequently processing, by the bound event loop, all events on the network channel. Each network channel corresponds to a socket.

Optionally, the method further includes: recognizing identifier information included in each device message, performing consumer instance information interaction based on the identifier information and the Internet of Vehicles platform subjected to expansion and contraction, and providing a corresponding service. The identifier information included in each device message includes: one or more of a device ID, and a timestamp received by a server.

Optionally, after the performing Internet of Vehicles platform expansion and contraction based on the expansion and contraction solution, the method further includes: performing consumer instance information interaction based on the Internet of Vehicles platform subjected to expansion and contraction, which includes: partitioning device messages based on device identifiers, and delivering to downstream messaging middleware. Each consumer instance is processed by a plurality of thread groups. Each thread group includes a consumption thread and a data queue. Messages with the same device ID identifier are bound to a unique thread group.

Optionally, the correcting, based on a change in a consumer cluster, the Internet of Vehicles platform expansion and contraction solution in real time includes: transmitting a heartbeat request and a rebalancing event to each consumer instance in the consumer cluster; determining whether each consumer instance is available based on a feedback result, and removing an unavailable consumer instance from the consumer cluster; and correspondingly submitting a consumption offset and clearing a memory queue in a case that each consumer exits and receives the rebalancing event.

Optionally, the correcting, based on a change in a consumer cluster, the Internet of Vehicles platform expansion and contraction solution in real time includes: selecting different correction solutions for the Internet of Vehicles platform expansion and contraction solution based on a comparison result of an actual allocated resource proportion of a scheduled previous monitoring period and a preset allocated resource proportion threshold; selecting a vertical resource change and thread scaling strategy in a case that the actual allocated resource proportion of the scheduled previous monitoring period is not greater than the preset allocated resource proportion threshold; and selecting a horizontal scaling strategy in a case that the actual allocated resource proportion of the scheduled previous monitoring period is greater than the preset allocated resource proportion threshold.

In a second aspect, the present disclosure provides an Internet of Vehicles platform expansion and contraction system, which includes: an acquisition unit, configured to acquire resource prediction basic information, and perform resource prediction based on the resource prediction basic information and a pre-constructed resource prediction model; a solution generating unit, configured to determine a corresponding middleware messaging solution based on a service type; an interaction unit, configured to generate an expansion and contraction solution based on a predicted resource and the middleware messaging solution, and perform Internet of Vehicles platform expansion and contraction based on the expansion and contraction solution; and a solution correcting unit, configured to correct, based on a change in a consumer cluster, the Internet of Vehicles platform expansion and contraction solution in real time during operation.

In a third aspect, the present disclosure provides a computer-readable storage medium. The computer-readable storage medium stores an instruction that, when running on a computer, enables the computer to perform the foregoing Internet of Vehicles platform expansion and contraction method.

The present disclosure has the following beneficial effects.
(1) According to the solution of the present disclosure, first, a resource prediction model is constructed based on a scene of Internet of Vehicles, to predict a resource within a scheduled time in the future based on real-time resource usage, so as to obtain prerequisite basic information for Internet of Vehicles platform expansion and contraction. Internet of Vehicles platform expansion and contraction is performed based on the basic information, to ensure that a constructed Internet of Vehicles capacity can satisfy service needs within a prediction time interval without causing excessive waste of resources.
(2) Based on special processing and transmission ways for status data in a gateway layer, a downstream service is changed to a stateless service, and transverse scaling can be easily realized.
(3) A corresponding information interaction solution is performed based on a specific consumer instance, to ensure a fixed and sequential interaction process of various consumer instances, so as to ensure a time sequence of data interaction.
(4) The Internet of Vehicles platform expansion and contraction solution is corrected based on a change in a consumer cluster in real time during operation, which further realizes dynamic expansion and contraction, ensures reduction in waste of resources at any time on the premise of satisfying needs, and thus further improves the intelligence of the solution.

### Brief Description of the Drawings

FIG. 1 is a flowchart of steps in an Internet of Vehicles platform expansion and contraction method according to an implementation of the present disclosure;
FIG. 2 is a schematic diagram of an architecture of an Internet of Vehicles platform according to an implementation of the present disclosure;
FIG. 3 is a schematic diagram of a deployment model of a stateful service architecture according to an implementation of the present disclosure;
FIG. 4 is a flowchart of automatic expansion and contraction of cloud resources on an Internet of Vehicles platform according to an implementation of the present disclosure;
FIG. 5 is a schematic diagram of a thread model of a network programming framework Netty according to an implementation of the present disclosure;
FIG. 6 is a schematic diagram of a consumer thread model for ensuring a time sequence according to an implementation of the present disclosure;
FIG. 7 is a schematic diagram of a unique thread corresponding to a terminal message in a system according to an implementation of the present disclosure;
FIG. 8 is a schematic diagram of configuration center Nacos-based dynamic thread configuration according to an implementation of the present disclosure; and
FIG. 9 is a diagram of a system structure of an Internet of Vehicles platform expansion and contraction system according to an implementation of the present disclosure.

### Detailed Description of the Embodiments

Implementations of the present disclosure will be described below with reference to the drawings and preferred embodiments. Those skilled in the art can easily understand other advantages and effects of the present disclosure from the content disclosed in the present description. The present disclosure can further be implemented or applied through other different specific implementations. Various details in the present description can also be modified or changed in various ways based on different viewpoints and applications without departing from the spirit of the present disclosure. It should be understood that the preferred embodiments are used to describe the present disclosure but are not intended to limit the scope of protection of the present disclosure.

It should be noted that the drawings provided in the following embodiments are used to describe the basic concept of the present disclosure in an illustrative way only. The drawings only show components related to the present disclosure but are not drawn according to the quantity, shape, and size of components in actual practice. In actual practice, the shape, quantity, and proportion of components can be changed arbitrarily, and an arrangement of the components may be more complex.

With the rapid development of intelligent connected vehicles, the amount of terminal access to an Internet of Vehicles platform is also growing at the same time. In general, the pressure on data processing of the Internet of Vehicles platform is getting bigger and bigger. In actual practice, traffic usage of the Internet of Vehicles platform demonstrates an obvious periodic characteristic. For example, the vehicle usage frequency during the day is higher than that at night. In the current solution of allocating a resource based on the maximum demand, this traffic usage of the Internet of Vehicles platform caused by different demands for vehicles will lead to obvious resource waste in a time interval with extremely low vehicle usage frequency, such as late at night. However, if a resource is allocated based on average traffic usage, a resource allocation need will not be satisfied in a time interval with high vehicle usage frequency, resulting in reduced user experience. In view of this situation, it is imperative to perform Internet of Vehicles platform expansion and contraction dynamically based on an actual need.

Currently, there are some solutions to satisfy this need. For example, the solution of the patent application No. CN112988398A, titled "Micro-service Dynamic Scaling and Migration Method and Device", proposes a solving strategy. According to this solving strategy, a to-be-optimized micro-service is marked by using a micro-service calling delay and an average resource utilization rate per unit time as thresholds. In a case that a tolerance condition is triggered, a target copy number corresponding to the to-be-optimized service is calculated based on a target resource utilization rate, a current resource utilization rate, the tolerance, and a current copy number, and a corresponding expansion and contraction operation is performed. This expansion and contraction method is relatively applicable to a stateless micro-service. However, in a scene of Internet of Vehicles, there are some stateful services (such as a device gateway), which include status data such as a device ID and basic information. However, this expansion and contraction technology is the same as the conventional load balancing strategy, and cannot realize session adhesion. Even if horizontal expansion is performed, status data of a single node will reach a resource upper limit due to an increase in traffic.

For another example, the solution of the patent application No. CN115756853A, titled "Intelligent Capacity Expansion and Reduction Method and System Based on Capacity Early Warning", proposes another solving strategy. According this solving strategy, a capacity warning is triggered, based on CPU and memory utilization rate thresholds, by sensing CPU and memory information of a service, a capacity change trend is determined based on a user request rate, and an expansion and contraction task is performed. However, indexes of this expansion and contraction method are limited to a CPU and a memory, and an expansion and contraction operation is passively triggered based on the indexes, which has a certain time delay.

Other existing solving strategies also suffer from the same problem, that is, they cannot simultaneously realize dynamic expansion and contraction and ensure a time sequence of data in the scene of Internet of Vehicles. The existing solutions have a certain limitation on dynamic expansion and contraction and ensuring a time sequence of data. In view of this problem, the solution of the present disclosure proposes a novel Internet of Vehicles platform expansion and contraction method. According to the solution of the present disclosure, first, a resource prediction model is constructed based on a scene of Internet of Vehicles, to predict a resource within a scheduled time in the future based on real-time resource usage, so as to obtain prerequisite basic information for Internet of Vehicles platform expansion and contraction. Internet of Vehicles platform expansion and contraction is performed based on the basic information, to ensure that a constructed Internet of Vehicles capacity can satisfy service needs within a prediction time interval without causing excessive waste of resources. A corresponding information interaction solution is performed based on a specific consumer instance, to ensure a fixed and sequential interaction process of various consumer instances, so as to ensure a time sequence of data interaction. The Internet of Vehicles platform expansion and contraction solution is corrected based on a change in a consumer cluster in real time during operation, which further realizes dynamic expansion and contraction, ensures reduction in waste of resources at any time on the premise of satisfying needs, and thus further improves the intelligence of the solution.

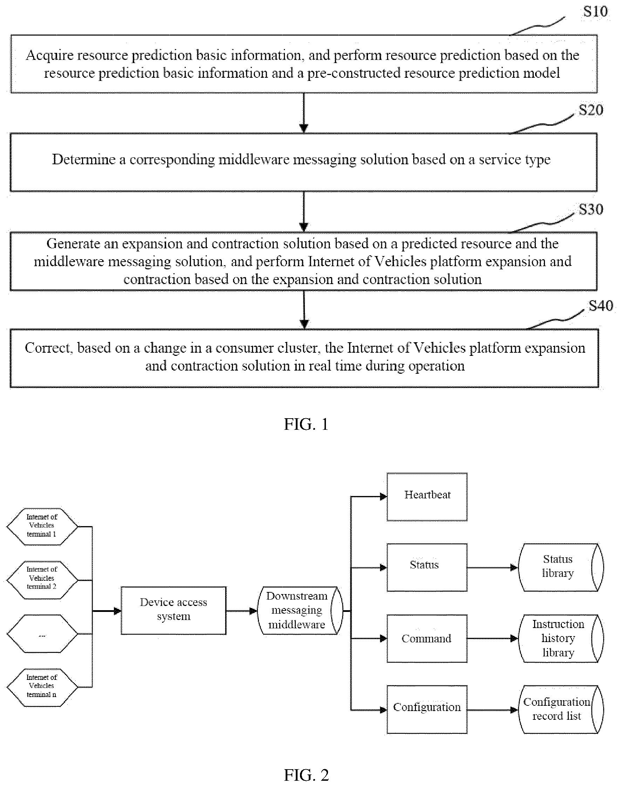

As shown in FIG. 1, in a first aspect, the present disclosure provides an Internet of Vehicles platform expansion and contraction method, which includes:
In a step of S 10, resource prediction basic information is acquired, and resource prediction is performed based on the resource prediction basic information and a pre-constructed resource prediction model.

Specifically, the solution of the present disclosure is realized based on an Internet of Vehicles platform architecture shown in FIG. 2. According to the solution of the present disclosure, a resource within a scheduled time in the future is predicted based on real-time traffic usage and occupancy of resources, so that expansion and contraction is performed in advance based on a prediction result. Therefore, corresponding expansion and contraction is completed before a scheduled prediction time is reached, to ensure operation of a subsequent service. Moreover, the expansion and contraction solution is performed based on a predicted resource, which will not cause excessive waste of resources and realize the balance between operation cost and satisfaction of service needs. In order to ensure the prediction accuracy, current resource usage needs to be completely and accurately acquired. Based on this, the resource prediction basic information includes: usage information of one or more targets of a CPU, a memory, a disk, a network bandwidth, and I/O.

Further, in order to improve the prediction accuracy and ensure the prediction efficiency, a resource prediction model needs to be constructed in advance. Historical usage information of vehicle terminal traffic on an Internet of Vehicles platform is acquired, and model training is performed by using the historical usage information as a training sample to obtain a traffic-resource trend model. A prediction period is divided into a plurality of sub-periods, and a feature vector corresponding to each sub-period is calculated based on resource prediction basic information of each sub-period. A prediction model is constructed based on the feature vector corresponding to each sub-period and the traffic-resource trend model and taken as a resource prediction model.

In a possible implementation, data acquisition is performed by configuring a monitoring system, and the monitoring system may be connected to an application program interface (API) of a cluster to perform data acquisition. For example, the monitoring system is connected to a metric API (an index API) of a K8S (kubernetes, a containerized deployment application) cluster. The monitoring system is connected to a monitoring system in the cluster, such as prometheus (a service monitoring system) and OpenTelemetry (an observable item). The traffic-resource trend model is constructed with reference to historical information within a recent period of time (to ensure the used historical data is close to a current moment, so as to improve the accuracy of the model). The preset period is divided into a plurality of sub-periods, and a feature vector corresponding to each sub-period is calculated based on an index value of each sub-period. For example, if the preset period is one day, the preset period may be divided into 48 sub-periods, and each period is 30 minutes.

It should be clear that the present implementation provides a possible sub-period division solution only. In view of different vehicle using habits of individual users, and on the basis of different periods, a high-frequency vehicle using time interval and a low-frequency vehicle using time interval corresponding to vehicle using habits may be customized according to user habits. For example, the vehicle using frequency of a user in holidays is different from that in ordinary days. In the solution of the present disclosure, this difference in vehicle using frequency is fully considered, so that the sub-period division solution is adjusted based on vehicle using habits of individual users or vehicle using habits within different time intervals. As long as it is a solution for constructing a traffic-resource trend model for resource prediction based on vehicle using habits of users, any sub-period division solution shall fall within the scope of protection of the solution of the present disclosure.

Further, a mean value, a maximum value, a minimum value, and a median of each index (mainly a CPU, a memory, a disk, a network bandwidth, and I/O) within each sub-period are calculated to obtain an initial vector of each index within each sub-period. The maximum value of the index within each sub-period is taken as a basis, vehicle terminal traffic and resource usage within each period of a current day are predicted in advance.

In a step of S20, a corresponding middleware messaging solution is determined based on a service type.

Specifically, in a case that the service type is a stateful service, the middleware messaging solution is determined as a stateful service deployment rule. The stateful service deployment rule includes: a device identifier is recognized, and a middleware partition is bound based on the identifier; and basic information is queried based on the device identifier, and the basic information is transmitted downstream by enhancing a message header.

In an embodiment of the present disclosure, for expansion and contraction of a stateful service, the present system stores independent identity information, such as information associated with a device, a vehicle or a person, for each Transmission Control Protocol (TCP) connection based on a socket (a channel attribute) in a gateway layer, and add relevant information to a message header of a middleware message. A downstream service may reuse this basic information for an operation such as authentication or routing, so local caching is performed without considering performance.

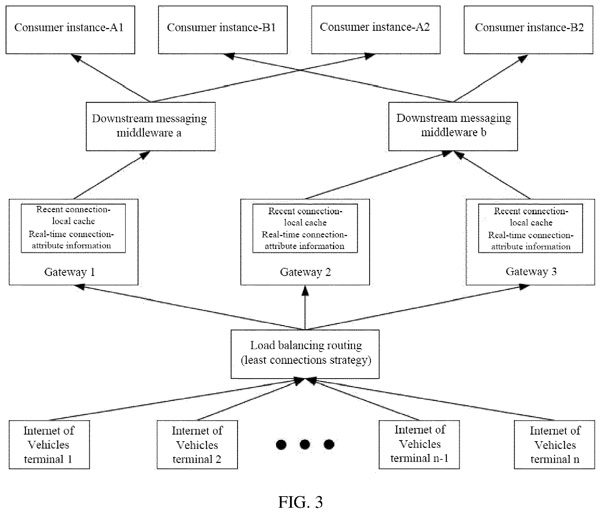

In a possible implementation, as shown in FIG. 3, the device adopts a least connections strategy when routing through load balancing, which can ensure that the load of each gateway is more balanced. Only during creation of a connection, basic identity information (information associated with a device, a vehicle or a person) is queried from a database, and stored in a socket-based channel (a channel attribute) in a device gateway layer. Because TCP is a long connection, subsequently each message based on this connection will be acquired from a corresponding socket-based channel, which is a memory-based read, with a speed the same as that of a local cache. Compared with the local cache, it has obvious advantages: the local cache will store all information that recently routes to this node, while the socket-based storage will only store a currently active connection. If the connection is broken, relevant information will be dynamically destroyed, so less memory is occupied. The gateway layer adds the relevant information to the message header of the middleware message, and the downstream consumer service may reuse this basic information for an operation such as authentication and routing. Therefore, local caching is performed without considering performance to store status information in the middleware message, all downstream services can be changed to stateless services, and the flexibility of dynamic scaling is higher. This mechanism is also applicable to Hypertext Transfer Protocol (HTTP)-based gateway processing.

In a step of S30, an expansion and contraction solution is generated based on a predicted resource and the middleware messaging solution, and Internet of Vehicles platform expansion and contraction is performed based on the expansion and contraction solution.

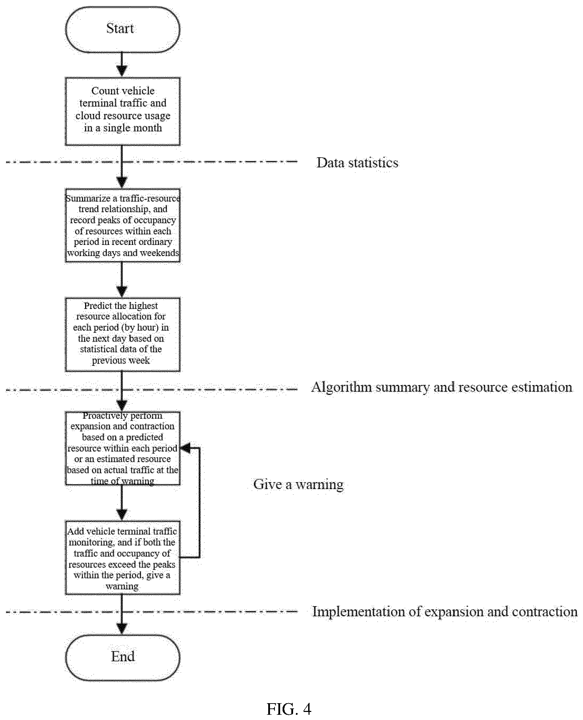

Specifically, as shown in FIG. 4, capacity basic information of the Internet of Vehicles platform is determined based on the predicted resource; the capacity basic information is corrected based on a preset margin correction rule to obtain a corrected target capacity; and the expansion and contraction solution of the Internet of Vehicles platform is determined based on the corrected target capacity.

In an embodiment of the present disclosure, during Internet of Vehicles platform expansion and contraction, expansion and contraction cannot be entirely performed based on a predicted resource need. Because an obtained prediction result is the most possible result that is predicted based on historical data, which cannot ensure an impact of a subsequent emergency on the prediction result. If expansion and contraction is entirely performed based on the prediction result, a service need under the condition of emergencies cannot be ensured. Based on this, a certain expansion and contraction margin needs to be preset to cope with emergencies.

In a possible implementation, when a model and a deployment solution are designed, 20% of server space, a bandwidth, and other resource redundancy are reserved as a preset margin, to ensure that a service can also be operated normally under the condition of sudden traffic and to avoid a performance problem and a failure caused by lack of resources.

Preferably, a dynamic expansion and contraction script is written to compare resources in advance based on resource estimates every 30 min. If there is a difference between an actual resource allocation and an estimated resource allocation, expansion and contraction is performed proactively. The more time intervals are divided, the higher the corresponding adaptability. However, it will also cause occupancy of resources during generation of the expansion and contraction solution. On the premise of balancing occupancy of resources and the adaptability, a user may customize the time interval division granularity to meet personalized use experience requirements.

Preferably, in another possible implementation, the corresponding expansion and contraction solution further includes a corresponding early warning solution. Current vehicle terminal message traffic and server resource usage are monitored in real time, a warning strategy is configured in advance, and if there is a warning for both resource consumption and message traffic, a server resource (mainly to cope with sudden traffic, mainly capacity expansion) needs to be adjusted in time to meet the needs.

Specifically, the step of performing Internet of Vehicles platform expansion and contraction based on the expansion and contraction solution includes: an expansion and contraction direction and an expansion and contraction capacity of the Internet of Vehicles platform are determined based on the corrected target capacity; a stateful service deployment rule is determined based on a distribution situation of access devices; and Internet of Vehicles platform expansion and contraction is performed based on the expansion and contraction direction, the expansion and contraction capacity, and the stateful service deployment rule.

Further, the step of determining a stateful service deployment rule based on a distribution situation of access devices includes: an access router is allocated to each access device based on a least connections algorithm to obtain a first allocation rule; a database is queried during creation of device basic information, the device basic information is subsequently stored in a socket-based channel of a device gateway layer, and a second allocation rule is determined based on an allocated channel; and the stateful service deployment rule is determined based on the first allocation rule and the second allocation rule.

Preferably, the method further includes: consumer instance identifier information included in each device message is recognized, consumer instance information interaction is performed based on the identifier information and the Internet of Vehicles platform subjected to expansion and contraction, and a corresponding service is provided.

Specifically, a message receiving and parsing component of each device gateway on the Internet of Vehicles platform is operated based on an event loop and network channel binding mechanism. The event loop and network channel binding mechanism includes: in a case that a new network channel is created, an event loop is randomly selected from an event loop group to be bound to the network channel, and subsequently all events on the network channel are processed by the bound event loop. Each network channel corresponds to a socket.

In an embodiment of the present disclosure, in order to meet the requirements for a time sequence of data on the Internet of Vehicles platform, the solution of the present disclosure proposes a special set of thread model and message processing mechanism, which ensures that data of the same vehicle terminal at each stage of a data processing link is processed by the same thread.

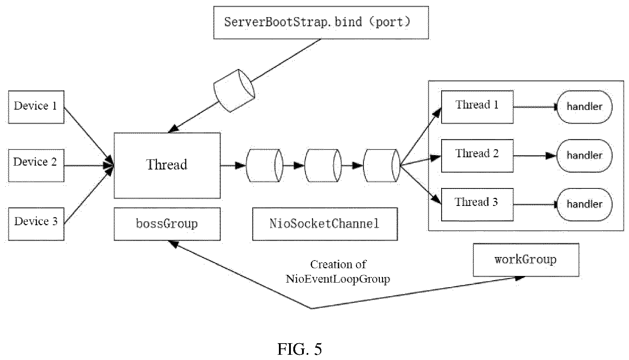

In a possible implementation, as shown in FIG. 5, a network programming framework Netty (a java open source framework) is employed as the message receiving and parsing component of the device gateway. A thread model of Netty adopts the EventLoop (event loop) and Channel (network channel) binding mechanism, and is realized by maintaining an EventLoopGroup (event loop group) and a plurality of EventLoop. When a new Channel is created, Netty will select an EventLoop from the EventLoopGroup and bind the EventLoop to the Channel, so that all events (such as a read/write event) on the Channel are processed by the EventLoop. Each Channel corresponds to a socket, that is, a communication channel of a vehicle terminal device. Based on this, after a device uplink message is parsed by the Netty component, a terminal time sequence of the data is still maintained.

Preferably, the identifier information included in each device message includes: one or more of a device ID and a timestamp received by a server.

Correspondingly, a parsing result of each message of the vehicle terminal includes information such as the device ID and the timestamp received by the server. The data parsing result is delivered to downstream messaging middleware Kafka (hereinafter referred to as Kafka) by using the device ID as a key. The Kafka-based partitioning strategy can ensure that data with the same key (that is, the same device) is transmitted to the same partition in order. In this way, data out of order can be avoided, and load balancing is realized in the consumer cluster. The same consumer group is used by a Kafka consumption terminal. Based on the characteristics of Kafka, a partition of Kafka will be fixedly transmitted to an instance in the consumer group. It also means that data with the same device ID will be transmitted to the same consumer instance in order.

Preferably, the step of performing consumer instance information interaction based on the identifier information and the Internet of Vehicles platform subjected to expansion and contraction includes: each piece of consumer instance information is partitioned based on the consumer instance identifier information, and delivered to downstream messaging middleware. Each consumer instance is processed by a plurality of threads, so that consumption threads are in one-to-one correspondence to data queues.

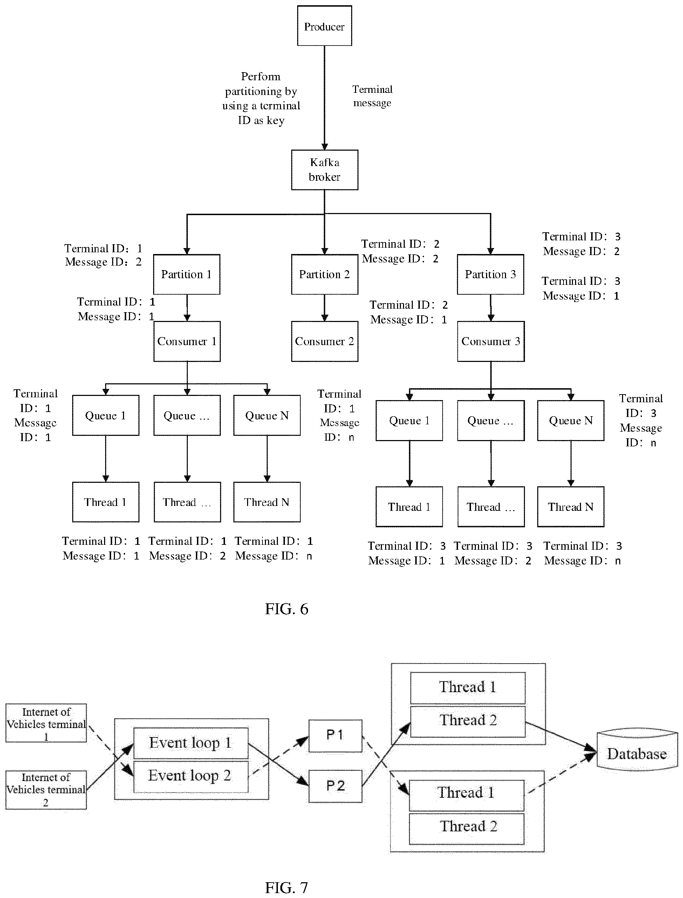

In a possible implementation, as shown in FIG. 6, each consumer instance is processed by a plurality of threads. It is assumed that the number of threads is constantly N, and the number of queues is also N, the consumption threads are in one-to-one correspondence to the data queues. When the consumer instance acquires the parsing result and extract the device ID, an incrementing integer is generated for each ID, this incrementing integer is used to modulo the number of threads N to obtain a value M, a data queue of the device and a processing thread are bound based on the value M. Based on this rule, it is ensured that the data of the same device can always be processed by the same thread, and messages that are not processed in time can always be stored in the same queue.

In an embodiment of the present disclosure, when routed to the gateway layer, the device message will be allocated to a thread (NioEventLoop) in the network programming framework (Netty) for processing. This thread is associated with a socket. Therefore, messages of the same terminal are always processed by this thread. In the device gateway layer, the identify ID of the terminal will be recognized, a partition is calculated based on this ID, and the device message is transmitted to the downstream messaging middleware (Kafka). Therefore, messages of the same terminal will always be transmitted to the same partition. When the terminal message is consumed downstream, the thread and TUID are bound based on a TUID Hash+ modulo algorithm, which can ensure that messages of the same terminal are always processed by the same thread at the Kafka consumer processing stage. Finally, the terminal messages are stored in the database one by one in the order of reporting.

As the solid link shown in FIG. 7, based on the socket-based channel of Internet of Things terminal and the device identifier information, as well as the thread model and the partitioning strategy of the present disclosure, it is ensured that messages with the same device identifier can always go through the same link at various processing stages (including a message parsing stage in the gateway layer, a middleware message partitioning stage, and a consumer subscription and service processing stage) of the entire system. Therefore, the order of the entire life cycle of device messages from reception to storage is ensured.

In a step of S40, the Internet of Vehicles platform expansion and contraction solution is corrected in real time based on a change in a consumer cluster during operation.

Specifically, a heartbeat request and a rebalancing event are transmitted to each consumer instance in the consumer cluster; whether each consumer instance is available is determined based on a feedback result, and an unavailable consumer instance is removed from the consumer cluster; and when each consumer exits and receives the rebalancing event, a consumption offset is correspondingly submitted, and a memory queue is cleared.

In a possible implementation, because the number of instances in the Kafka consumer group changes, in order to ensure that each partition is uniformly distributed to consumer instances as much as possible, Kafka will rebalance the consumer group. At this stage, Kafka will distribute messages to different consumer instance. A consumer group coordinator will transmit a heartbeat request to each consumer instance in the consumer group, to see if they are still available. If a certain consumer instance cannot respond to the heartbeat request, the consumer instance will be removed from the consumer group. After rebalancing is completed, the consumer group coordinator will transmit a notification to all the consumer instances, to inform the consumer instances that the rebalancing has been completed and they can consume messages.

Further, when a consumer instance implements a Shutdown Hook method, it is necessary to ensure that tasks in each thread are performed correctly and an offset is submitted, then the memory queue is cleared, and finally consumption is stopped. When a rebalancing notification is received, a respective consumption offset of each partition allocated to the instance is submitted proactively.

Preferably, the step of correcting, based on a change in a consumer cluster, the Internet of Vehicles platform expansion and contraction solution in real time includes: different correction solutions for the Internet of Vehicles platform expansion and contraction solution are selected based on a comparison result of an actual allocated resource proportion of a scheduled previous monitoring period and a preset allocated resource proportion threshold; if the actual allocated resource proportion of the scheduled previous monitoring period is not greater than the preset allocated resource proportion threshold, a vertical resource change and thread scaling strategy is selected; and if the actual allocated resource proportion of the scheduled previous monitoring period is greater than the preset allocated resource proportion threshold, a horizontal scaling strategy is selected.

In a possible implementation, for example, it is assumed that the threshold is 83.33%, if monitored occupancy of CPU and memory on the previous day does not reach the actual allocated resource proportion threshold, thread-level scaling is adopted for intra-day expansion and contraction, and meanwhile the size of CPU and memory is adjusted accordingly. Based on Ack-Koordinator, Pod will take effect temporarily without restarting. If the monitored occupancy of CPU and memory on the previous day exceeds the actual allocated resource proportion threshold, instance-level scaling is adopted.

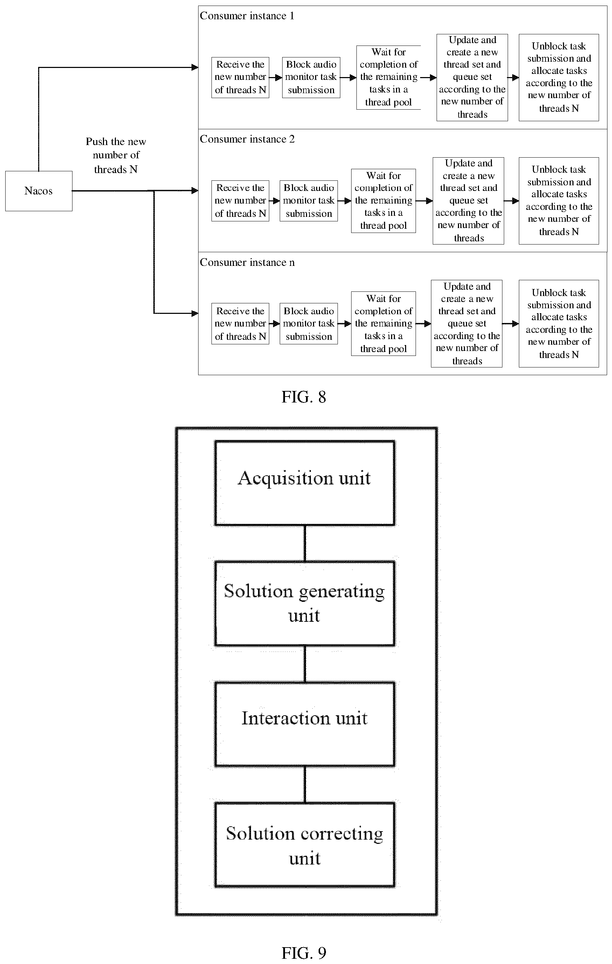

Preferably, as shown in FIG. 8, the instance-level scaling strategy includes: in response to a request for correcting the Internet of Vehicles platform expansion and contraction solution, all registered instances are dynamically notified based on the preset number of instance threads; and on the premise of ensuring normal consumption of data, the number of threads and queues is dynamically adjusted.

In a possible implementation, Nacos is employed as a dynamic configuration center. The number of instance threads may be maintained in the configuration center, and meanwhile the number of queues may also be maintained. When dynamic thread-level expansion and contraction is required, this parameter may be dynamically adjusted. Nacos will dynamically notify all the registered instances (instances with the same namespace, group, and dataID), and after receiving the change in the number of threads, the instances will dynamically adjust the number of threads and queues on the premise of ensuring normal consumption of data.

As shown in FIG. 9, a second solution of the present disclosure provides an Internet of Vehicles platform expansion and contraction system, which includes: an acquisition unit, configured to acquire resource prediction basic information, and perform resource prediction based on the resource prediction basic information and a pre-constructed resource prediction model; a solution generating unit, configured to generate an expansion and contraction solution based on a predicted resource, and perform Internet of Vehicles platform expansion and contraction based on the expansion and contraction solution; an interaction unit, configured to recognize each piece of consumer instance identifier information, perform consumer instance information interaction based on the identifier information and the Internet of Vehicles platform subjected to expansion and contraction, and provide a corresponding service; and a solution correcting unit, configured to correct, based on a change in a consumer cluster, the Internet of Vehicles platform expansion and contraction solution in real time during operation.

An implementation of the present disclosure further provides a computer-readable storage medium. The computer-readable storage medium stores an instruction that, when running on a computer, enables the computer to perform the foregoing Internet of Vehicles platform expansion and contraction method.

Those skilled in the art can understand that all or some of the steps in the method for implementing the foregoing implementations may be completed by a program instructing relevant hardware. The program is stored in a storage medium, and includes several instructions for enabling a single-chip computer, a chip or a processor to perform all or some of the steps in the method described in various implementations. The foregoing storage medium includes: various media capable of storing program code, such as a USB flash drive, a mobile hard disk, a read-only memory (ROM), a random access memory (RAM), a diskette or an optical disk.

The preferred implementations of the present disclosure have been described above in detail with reference to the drawings. However, the implementations of the present disclosure are not limited to the details in the foregoing implementations. Several simple modifications may be made to the technical solutions of the implementations of the present disclosure within the scope of the technical concept of the implementations of the present disclosure, and these simple modifications shall fall within the scope of protection of the implementations of the present disclosure. In addition, it should be noted that various specific technical features described in the foregoing specific implementations may be combined in any suitable way without conflict. In order to avoid unnecessary repetition, various possible combinations will not be described further in the implementations of the present disclosure.

In addition, various different implementations of the present disclosure may also be combined arbitrarily without departing from the idea of the implementations of the present disclosure, and these combinations shall be deemed as the content disclosed in the implementations of the present disclosure.

## Claims

1. An Internet of Vehicles platform expansion and contraction method, comprising:
acquiring resource prediction basic information, and performing resource prediction based on the resource prediction basic information and a pre-constructed resource prediction model;
determining a corresponding middleware messaging solution based on a service type;
generating an expansion and contraction solution based on a predicted resource and the middleware messaging solution, and performing Internet of Vehicles platform expansion and contraction based on the expansion and contraction solution; and
correcting, based on a change in a consumer cluster, the Internet of Vehicles platform expansion and contraction solution in real time during operation.

2. The Internet of Vehicles platform expansion and contraction method according to claim 1, wherein the resource prediction basic information comprises:
usage information of one or more targets of a central processing unit (CPU), a memory, a disk, a network bandwidth, and input/output (I/O).

3. The Internet of Vehicles platform expansion and contraction method according to claim 1, wherein the method further comprises: constructing a resource prediction model, comprising:
acquiring historical usage information of vehicle terminal traffic on an Internet of Vehicles platform, and performing model training by using the historical usage information as a training sample to obtain a traffic-resource trend model;
dividing a prediction period into a plurality of sub-periods, and calculating a feature vector corresponding to each sub-period based on resource prediction basic information of each sub-period; and
constructing a prediction model based on the feature vector corresponding to each sub-period and the traffic-resource trend model, and taking the prediction model as a resource prediction model.

4. The Internet of Vehicles platform expansion and contraction method according to claim 3, wherein the calculating a feature vector corresponding to each sub-period based on resource prediction basic information of each sub-period comprises:
respectively calculating, within each sub-period, an evaluation index of each piece of resource prediction basic information; and
generating an initial vector of each index within each sub-period based on the evaluation index of each piece of resource prediction basic information; wherein
the evaluation index comprises:
one or more of a mean value, a maximum value, a minimum value, and a median.

5. The Internet of Vehicles platform expansion and contraction method according to claim 1, wherein the determining a corresponding middleware messaging solution based on a service type comprises:
determining that the middleware messaging solution is a stateful service deployment rule in a case that the service type is a stateful service; and
the stateful service deployment rule comprises:
recognizing a device identifier, and binding a middleware partition based on the identifier; and
querying basic information based on the device identifier, and transmitting the basic information downstream by enhancing a message header.

6. The Internet of Vehicles platform expansion and contraction method according to claim 1, wherein the generating an expansion and contraction solution based on a predicted resource and the middleware messaging solution comprises:
determining capacity basic information of an Internet of Vehicles platform based on the predicted resource;
correcting, based on a preset margin correction rule, the capacity basic information to obtain a corrected target capacity; and
determining the expansion and contraction solution of the Internet of Vehicles platform based on the corrected target capacity and the middleware messaging solution.

7. The Internet of Vehicles platform expansion and contraction method according to claim 5, wherein the performing Internet of Vehicles platform expansion and contraction based on the expansion and contraction solution comprises:
determining an expansion and contraction direction and an expansion and contraction capacity of the Internet of Vehicles platform based on the corrected target capacity; and
performing Internet of Vehicles platform expansion and contraction based on the expansion and contraction direction, the expansion and contraction capacity, and the determined middleware messaging solution.

8. The Internet of Vehicles platform expansion and contraction method according to claim 5, wherein the determining that the middleware messaging solution is a stateful service deployment rule in a case that the service type is a stateful service comprises:
allocating, based on a least connections algorithm, an access router to each access device to obtain a first allocation rule;
querying a database during creation of device basic information, subsequently storing in a socket-based channel of a device gateway layer, and determining a second allocation rule based on an allocated channel; and
determining the stateful service deployment rule based on the first allocation rule and the second allocation rule.

9. The Internet of Vehicles platform expansion and contraction method according to claim 1, wherein a message receiving and parsing component of each device gateway on the Internet of Vehicles platform is operated based on an event loop and network channel binding mechanism; wherein
the event loop and network channel binding mechanism comprises:
randomly selecting, in a case that a new network channel is created, an event loop from an event loop group to be bound to the network channel, and subsequently processing, by the bound event loop, all events on the network channel, each network channel corresponding to a socket.

10. The Internet of Vehicles platform expansion and contraction method according to claim 1, further comprising:
recognizing consumer instance identifier information comprised in each device message, performing consumer instance information interaction based on the identifier information and the Internet of Vehicles platform subjected to expansion and contraction, and providing a corresponding service,
the consumer instance identifier information comprised in each device message comprising: one or more of a device ID and a timestamp received by a server.

11. The Internet of Vehicles platform expansion and contraction method according to claim 1, after the performing Internet of Vehicles platform expansion and contraction based on the expansion and contraction solution, further comprising:
performing consumer instance information interaction based on the Internet of Vehicles platform subjected to expansion and contraction, comprising:
partitioning device message information based on device identifiers, and delivering to downstream messaging middleware,
each consumer instance being processed by a plurality of thread groups, each thread group comprising a consumption thread and a data queue, messages with the same device ID identifier being bound to a unique thread group.

12. The Internet of Vehicles platform expansion and contraction method according to claim 1, wherein the correcting, based on a change in a consumer cluster, the Internet of Vehicles platform expansion and contraction solution in real time comprises:
transmitting a heartbeat request and a rebalancing event to each consumer instance in the consumer cluster;
determining whether each consumer instance is available based on a feedback result, and removing an unavailable consumer instance from the consumer cluster; and
correspondingly submitting a consumption offset and clearing a memory queue in a case that each consumer exits and receives the rebalancing event.

13. The Internet of Vehicles platform expansion and contraction method according to claim 1, wherein the correcting, based on a change in a consumer cluster, the Internet of Vehicles platform expansion and contraction solution in real time comprises:
selecting different correction solutions for the Internet of Vehicles platform expansion and contraction solution based on a comparison result of an actual allocated resource proportion of a scheduled previous monitoring period and a preset allocated resource proportion threshold;
selecting a vertical resource change and thread scaling strategy in a case that the actual allocated resource proportion of the scheduled previous monitoring period is not greater than the preset allocated resource proportion threshold; and
selecting a horizontal scaling strategy in a case that the actual allocated resource proportion of the scheduled previous monitoring period is greater than the preset allocated resource proportion threshold.

14. An Internet of Vehicles platform expansion and contraction system, comprising:
an acquisition unit, configured to acquire resource prediction basic information, and perform resource prediction based on the resource prediction basic information and a pre-constructed resource prediction model;
a solution generating unit, configured to determine a corresponding middleware messaging solution based on a service type;
an interaction unit, configured to generate an expansion and contraction solution based on a predicted resource and the middleware messaging solution, and perform Internet of Vehicles platform expansion and contraction based on the expansion and contraction solution; and
a solution correcting unit, configured to correct, based on a change in a consumer cluster, the Internet of Vehicles platform expansion and contraction solution in real time during operation.

15. A computer-readable storage medium, wherein the computer-readable storage medium stores an instruction that, when running on a computer, enables the computer to perform the Internet of Vehicles platform expansion and contraction method according to any one of claims 1 to 13.
